# EUROPÄISCHE PATENTSCHRIFT

(11) **EP 1 933 998 B1**
(45) Veröffentlichungstag und Bekanntmachung des Hinweises auf die Patenterteilung: **03.06.2009**
(21) Anmeldenummer: 06792102.3
(22) Anmeldetag: 15.09.2006
(51) Int. Cl.: B21D 26/02, B21D 53/88, B60G 7/00

(54) **VERFAHREN ZUM HERSTELLEN EINES ACHSENBAUTEILS**
METHOD FOR MANUFACTURING AN AXLE COMPONENT
PROCEDE POUR PRODUIRE UN COMPOSANT DE MOYEU

(30) Priorität: 13.10.2005 DE 102005049050
(43) Veröffentlichungstag der Anmeldung: 25.06.2008
(73) Patentinhaber: SAF-HOLLAND GmbH, 63856 Bessenbach (DE)
(72) Erfinder: DREWES, Olaf, 63743 Aschaffenburg (DE); SPIELMANN, Rolf, 97877 Wertheim-Bettingen (DE)
(74) Vertreter: Bauer, Clemens
(86) Internationale Anmeldenummer: PCT/EP2006/009021
(87) Internationale Veröffentlichungsnummer: WO 2007/042123

(56) Entgegenhaltungen:
- EP-A- 0 760 265
- DE-A1- 10 330 314
- DE-A1- 19 963 679

## Beschreibung

Die vorliegende Erfindung betrifft ein Verfahren zum Herstellen eines Achsenbauteils, gemäß dem Oberbegriff des Anspruchs 1 (siehe z.B. DE-A-199 63 679).

Herkömmlich werden Achsenbauteile, wie beispielsweise Radaufhängungslenker, durch verschiedene Herstellverfahren hergestellt. Beispiele derartiger Herstellverfahren sind Gießen, Schmieden oder Schweißen. Darüber hinaus gibt es das sogenannte Hydroformen (Innenhochdruckumformung IHU), bei dem ein hohles oder rohrförmiges Bauteil mit einem Flüssigkeitsdruck beaufschlagt wird, so daß sich die Wand des hohlen Bauteils an eine Negativform anlegt. Dieses Verfahren leidet jedoch an dem Nachteil, daß das hohle Bauteil vorgeformt werden muß und nur eine Wandstärke von bis zu 2,5 mm aufweisen sollte, um das Hydroformverfahren (Innenhochdruckumformung IHU) erfolgreich durchführen zu können. Zudem muß in aller Regel eine Wärmebehandlung nach dem Vorformen erfolgen, um die Materialeigenschaften für den eigentlichen Hydroformvorgang wieder herzustellen.

Demgemäß hat jedes der herkömmlichen Herstellverfahren bei der Herstellung eines Achsenbauteils mit einer verhältnismäßig komplexen Form den Nachteil, daß viele Verfahrensschritte erforderlich sind, um das Achsenbauteil herzustellen. Dadurch sind die Kosten für die Herstellung des Achsenbauteils hoch.

Die Aufgabe der Erfindung besteht in der Bereitstellung eines kostengünstigen Herstellverfahrens für ein Achsenbauteil.

Diese Aufgabe wird erfindungsgemäß durch ein Verfahren nach Anspruch 1 gelöst. Vorteilhafte Weiterbildungen der Erfindung ergeben sich aus den abhängigen Ansprüchen.

Vorzugsweise hat das hohle Halbzeug eine Wandstärke von mindestens 2 mm, vorzugsweise von 3 bis 6 mm, am meisten bevorzugt von 4 bis 5 mm.

Vorzugsweise liegt der Druck im Bereich von 1200 bis 2500 bar (120 x 10⁶ Pa bis 250 x 10⁶ Pa), vorzugsweise im Bereich von 1800 bis 2200 bar (180 x 10⁶ bis 220 x 10⁶ Pa).

Bei dem erfindungsgemäßen Hydroformen kann ein handelsübliches Halbzeug, wie beispielsweise ein rundes Rohr, ovales Rohr oder ein Vierkantrohr, unmittelbar in eine endgültige Form des Achsenbauteils überführt werden, so daß ein Schritt des Vorformens eines Halbzeugs entfallen kann. Dies wird insbesondere durch den hohen Druck des erfindungsgemäßen Hydroformverfahrens verwirklicht. Dabei können Rohre mit einer Wandstärke von mehr als zwei Millimetern und bis zu mehr als fünf Millimetern durch das erfindungsgemäße Hydroformverfahren unmittelbar in eine endgültige Form des Achsenbauteils überführt werden. Da das Achsenbauteil nicht vorgeformt werden muss, wird neben der Vermeidung eines zusätzlichen Arbeitsschrittes eine lokale übermäßige Dehnung vermieden. Auf diese Weise kann ein Achsenbauteil mit hoher Festigkeit kostengünstig hergestellt werden, welches keines weiteren Verformungsschrittes mehr bedarf. Es entsteht somit unmittelbar ein geschlossenwandiger, hochbelastbarer Querschnitt ohne belastete Schweißnähte.

Gemäß der Erfindung werden zumindest zwei identische bzw. spiegelsymmetrische Achsenbauteile gleichzeitig geformt, die nach dem Formen getrennt werden, so daß mit nur einem Formprozeß eine Vielzahl an- Achsenbauteilen hergestellt werden kann. Hierdurch ist eine weitere Kosten- und Zeitersparnis bei der Herstellung möglich.

Da zumindest zwei längliche Achsenbauteile, wie beispielsweise Radaufhängungslenker, eine längliche Form aufweisen und sich in einer Längsrichtung beim Formen der Vielzahl der Achsenbauteile überlappen, kann ein Überstand an einem Ein- und/oder Auslauf der Hydroform minimiert werden, so daß überschüssiges Material, das nach dem Formen zu entfernen ist, ebenfalls minimiert wird. Hierdurch ergibt sich ein weiterer Kostenvorteil.

Vorzugsweise werden durch das erfindungsgemäße Verfahren Radaufhängungslenker mit Federaufnahmefortsätzen hergestellt. Da derartige Federaufnahmefortsätze in der Richtung einer Fahrzeughochachse Z eine geringere Dimension als ein übriger Abschnitt eines Radaufhängungslenkers haben, können vorzugsweise zwei Radaufhängungslenker gleichzeitig geformt werden, wobei die Radaufhängungslenker so geformt werden, daß die Federaufnahmefortsätze sich in der Längsrichtung überlappen. Nach dem Formen werden die beiden Radaufhängungslenker dann voneinander getrennt. Hierdurch ist die Materialausbeute maximal.

Vorzugsweise wird die Form zum Formen des Achsenbauteils so ausgebildet, dass die Federaufnahmefortsätze in einer Querrichtung der Radaufhängungslenker seitlich versetzt angeordnet sind.

Das erfindungsgemäße Hydroformverfahren bietet darüber hinaus den Vorteil, daß im Falle der Radaufhängungslenker die Federaufnahmefortsätze auf einfache Weise durch entsprechendes Ausbilden der Negativform in einer Querrichtung des Fahrzeugs im Falle eines Längslenkers seitlich versetzt sein können. Hierdurch kann beispielsweise ein Längslenker geformt werden, der hervorragende Radführungseigenschaften hat, da Achsaufnahmen eines Paars Längslenker einen großen Abstand voneinander haben und nahe einem Rad der Radaufhängung angeordnet sind, während gleichzeitig die Federn entfernt von dem Rad - in Richtung zur Fahrzeugmitte in der Querrichtung des Längslenkers gesehen - versetzt sind, so daß die Einbaukonfiguration der Federn verbessert werden kann. Mit anderen Worten können die Längslenker maximal voneinander beabstandet werden, wohingegen die Federn näher zueinander angeordnet sein können.

Vorzugsweise weist das Verfahren des weiteren den Schritt des Einschweißens einer Buchse in eine Gelenkaufnahme für die schwenkbare Befestigung des Radaufhängungslenkers an einem Fahrzeugrahmen auf.

Vorzugsweise wird die Steifigkeit eines durch das erfindungsgemäße Hydroformverfahren hergestellten Längslenkers dadurch erhöht, daß an einem bei der Schwenkachse des Längslenkers liegenden Ende ein im wesentlichen dreieckförmiges Stück aus dem Paar Seitenwände ausgeschnitten wird und eine Ober- bzw. Unterwand (Ober- bzw. Untergurt) bzw. ein durch das Ausschneiden sich ergebender zungenförmiger Abschnitt der Ober- bzw. Unterwand so zu einer Gelenkaufnahme hin gebogen wird, daß diese Ober- bzw. Unterwand mit den Seitenwänden des Längslenkers verschweißt werden kann. Hierdurch wird der Vorteil erzielt, daß im Bereich der Schwenkachse eine hohe Steifigkeit des Längslenkers erzielt wird.

Darüber hinaus können bei einem durch das erfindungsgemäße Hydroformverfahren hergestellten Achsenbauteil ein oder mehrere Einbeulungen oder Ausbeulungen in den Wänden des Achsenbauteils ausgebildet werden. Hierdurch wird die Steifigkeit des Achsenbauteils weiter erhöht. Die Form derartiger Ein- und Ausbeulungen kann verhältnismäßig beliebig gestaltet werden, am besten werden diese in Verbindung mit einer Finite-Elemente-Methode (FEM) bestimmt. Begrenzend wirken hier nur die mechanischen Eigenschaften des verwendeten Einsatzmaterials bzw. Halbzeugs, insbesondere die plastische Verformbarkeit. Weiter bevorzugt kann ein Teil der Ein- bzw. Ausbeulung im wesentlichen in einer Mitte derselben ausgeschnitten werden, wenn dieser mittlere Abschnitt nur geringe Kräfte zu übernehmen hat, so daß ein durch das Hydroformverfahren hergestelltes Achsenbauteil ein geringeres Gewicht erhalten kann.

Ein wesentlicher Vorteil des erfindungsgemäßen Hydroformverfahrens besteht darin, daß lokale Dehnungsraten des geformten Achsenbauteils eine vorgegebene Höhe nicht überschreiten.

Weiterhin kann durch das Hydroformen ein geschlossener Querschnitt eines Achsenbauteils erzielt werden, ohne daß es hochbelastete Schweißnähte des Querschnitts gibt. Mit nur einem Werkzeug und einem Hub einer Hydroformvorrichtung kann gleichzeitig beispielsweise ein Paar Längslenker hergestellt werden.

Die Erfindung wird nun anhand von Ausführungsbeispielen im Zusammenhang mit den beigefügten Zeichnungen näher erläutert. Die Ausführungsbeispiele zeigen jedoch nur auf beispielhafte Weise die Herstellung eines Radaufhängungslenkers. Wie der Fachmann unschwer erkennen kann, kann die Erfindung jedoch auch auf andere Achsenbauteile und Aufbaubauteile eines Fahrzeugs angewandt werden.

Figur 1 zeigt ein erstes Ausführungsbeispiel eines Längslenkers, bei dem ein Federaufnahmefortsatz im wesentlichen auf derselben Höhe wie ein Schwenklager des Längslenkers angeordnet ist.

Figur 2 zeigt ein alternatives Ausführungsbeispiel, bei dem im Gegensatz zu dem in Figur 1 gezeigten Ausführungsbeispiel ein Federaufnahmefortsatz höher als eine Gelenkachse des Längslenkers angeordnet ist.

Figur 3 zeigt ein Rohr nach dem Hydroformen, aus dem zwei im wesentlichen identische bzw. spiegelsymmetrische Längslenker ausgeschnitten werden können.

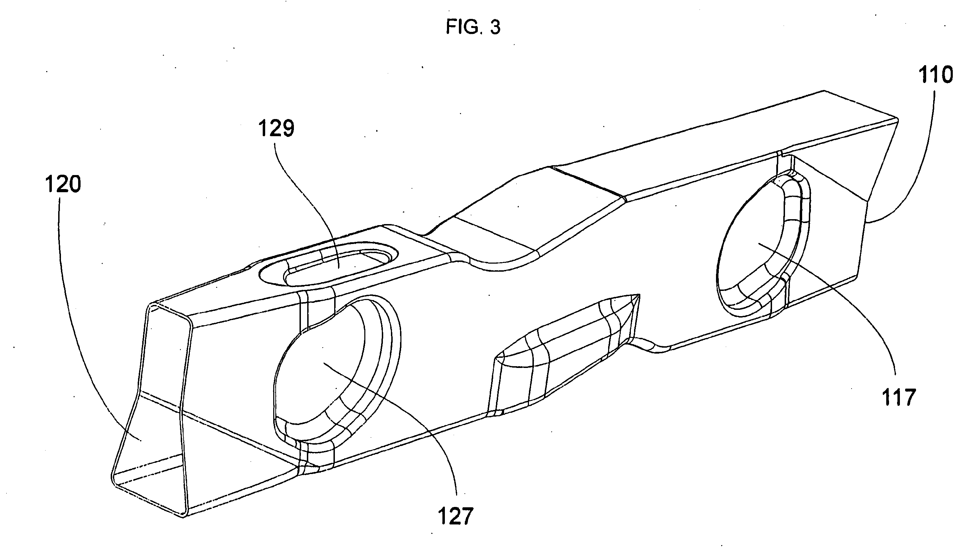

Wie in Figur 3 dargestellt ist, wird durch Hydroformen eines Rohrs, vorzugsweise eines runden Stahlrohrs aus einem Stahl mit einer hohen Bruchdehnung im Bereich von ca. 10 bis 15%, vorzugsweise im wesentlichen ca.10% ein gewünschter Hohlkörper hergestellt. Bei höheren Anfordungen an die Bruchdehnung bzw. die plastische Verformbarkeit während des Herstellprozesses und/oder das Korrosionsverhalten können geeignete Edelstahlqualitäten verwendet werden. Bei hohen Anforderungen an die Festigkeit des Hohlkörpers kann auch ein Mehrphasenstahl verwendet werden. Das beschriebene Verfahren bietet insbesondere hier zusätzliche Vorteile, da nur ein einziger Verformungsprozeß benötigt wird, wodurch ein Mehrphasenstahl seine zusätzliche Festigkeit erhält. Ein zusätzlicher Verformungsprozeß, z. B. Vorformung, würde die Verwendbarkeit solcher Stähle ausschließen. Ebenso kommen auch Nicht-Eisen-Metalle, wie beispielsweise Aluminiumlegierung, mit geeigneten Werkstoffeigenschaften als für das Halbzeug verwendete Werkstoffe bzw. Einsatzwerkstoffe in Frage. Darüber hinaus kann je nach gewünschter Form auch ein Vierkantrohr, ovales Rohr oder andere Rohrquerschnitte als ein Halbzeug für das Hydroformen verwendet werden.

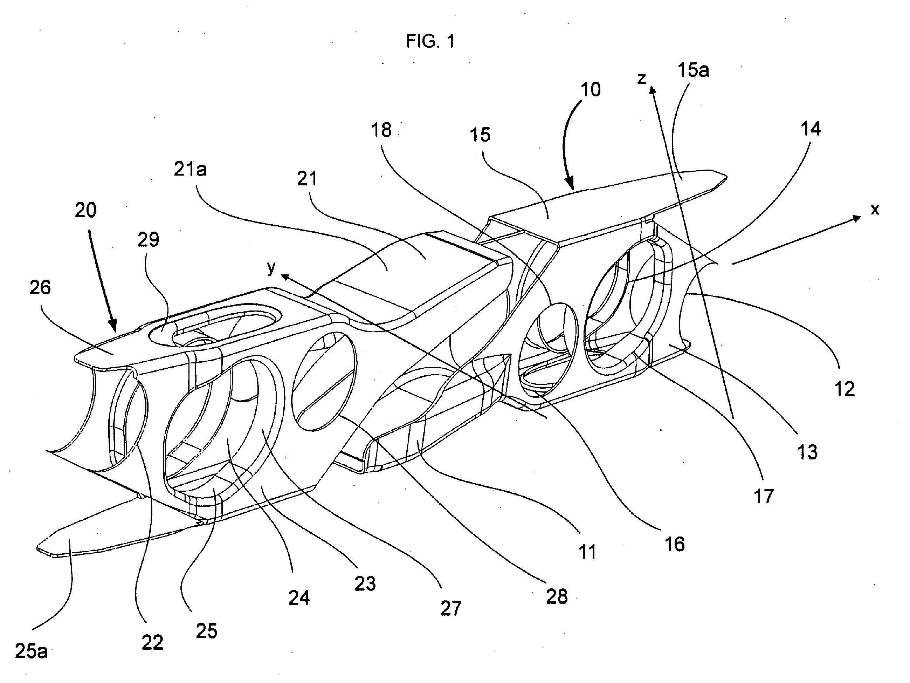

Nach dem Hydroformen muß noch ein Überstand an einem vorderen und hinteren Ende, der sich durch den Ein- und Auslauf ergibt, abgetrennt werden. Aus dem in Figur 3 dargestellten Hohlkörper werden schließlich zwei Längslenker 10, 20, wie sie in Figur 1 dargestellt sind, hergestellt, indem der Hohlkörper von Figur 3 in der Mitte entsprechend der Form der Federaufnahmefortsätze 11, 21 des Paars Längslenker 10, 20 getrennt wird.

Die Form der Längslenker 10, 20 kann dabei durch eine Finite-Elemente-Methode optimiert werden, so daß die Längslenker 10, 20 eine bevorzugte Biege- und Torsionssteifigkeit und günstige Zug- und Druckspannungsniveaus aufweisen. Für die Erhöhung der Steifigkeiten sind die Längslenker 10, 20 mit Einbeulungen 17, 27 und 28 versehen. Um das Gewicht der Längslenker 10, 20 zu reduzieren, wird ein mittlerer oder zentraler Abschnitt der Einbeulungen 17, 27, 29 beispielsweise durch Laserschneiden entfernt. Darüber hinaus wird eine nicht gezeigte Buchse für ein Schwenklager des Längslenkers 10, 20 mit einer durch das Hydroformen bereits ausgebildeten Gelenkaufnahme 12, 22 verschweißt. Um das Einleiten von entsprechenden Kräften in das Schwenklager der nicht dargestellten Buchse des Längslenkers 10, 20 zu verbessern, wird an dem Ende des Längslenkers 10, 20 in der Nähe der Gelenkaufnahme 12, 22 ein dreieckförmiges Stück aus den Seitenwänden 13, 14 bzw. 23, 24 des Paars Längslenker 10, 20 ausgeschnitten, ebenfalls beispielsweise durch Laserschneiden. Danach wird ein zungenförmiger Abschnitt 15a, 25a einer Unterwand bzw. eines Untergurts 15, 25 des Längslenkers 10, 20 zu der Schnittkante der Seitenwände 13, 14 bzw. 23, 24 hin gebogen und mit den Seitenwänden 13, 14 bzw. 23, 24 verschweißt. Auf diese Weise kann der zungenförmige Abschnitt 15a, 25a der Unterwände 15, 25 entsprechende Zug- und Druckbelastungen in die Gelenkaufnahme 12, 22 einleiten.

Auf diese Weise wird ein Längslenker mit einem Hohlprofil geschaffen, der außer der Schweißnaht an der Gelenkaufnahme 12, 22 und der Schweißnaht an dem zungenförmigen Abschnitt 15a, 25a keine weiteren hochbelasteten Schweißnähte aufweist. Somit kann durch ein einfaches Verfahren ein Längslenker 10, 20 mit einem Hohlprofil hergestellt werden, der ein Minimum an Schweißnähten aufweist. Je nach Ausführung des Längslenkers 10, 20 bzw. eines anderen Rahmen- oder Radaufhängungsbauteils eines Fahrzeugs kann auf das Heraustrennen der dreiecksförmigen Teile zur Erlangung der zungenförmigen Abschnitte 15a, 25a vollständig verzichtet werden.

Indem ein Paar Längslenker 10, 20 mit nur einem Hydroformschritt hergestellt wird, wird - im Gegensatz zum Formen nur eines Bauteils - überschüssiges Material eines Überstands, der sich verfahrensbedingt aus dem Ein- und Auslauf ergibt, auf weinger als die Hälfte verringert werden. Grund dafür ist, daß es durch das beschriebene Verfahren möglich ist, die Umfangslängen der Rohrenden 110, 120 in der gleichen Größenordnung der Umfangslänge des Halbzeuges zu halten. So können die verfahrensbedingten Ein- und Ausläufe sehr kurz gehalten werden. Da darüber hinaus die Federaufnahmefortsätze 11, 21 eine geringere Abmessung in einer Fahrzeugvertikalrichtung Z als die übrigen Abschnitte der Längslenker 10, 20 haben, können die Federaufnahmefortsätze 11, 21 beim Hydroformen des Paars Längslenker 10, 20 sich in der Längsrichtung X der Längslenker 10, 20 jeweils überlappen. Auf diese Weise wird noch mehr überschüssiges Material eingespart.

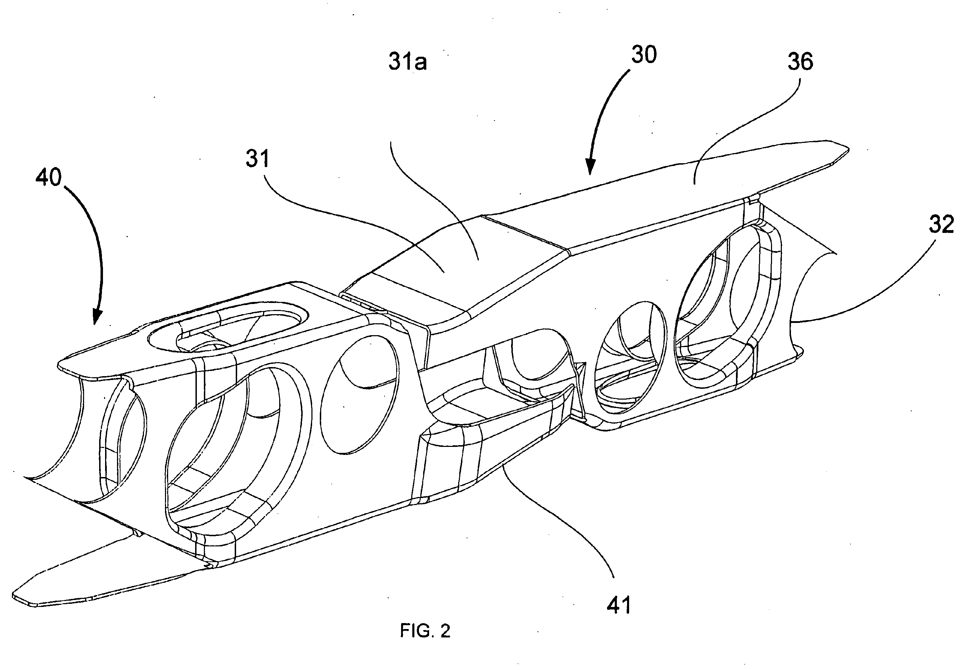

Figur 2 zeigt ein alternatives Ausführungsbeispiel ebenfalls von Längslenkern 30, 40 für eine Radaufhängung eines Fahrzeugs. Die in Figur 2 dargestellten Längslenker 30, 40 weisen im wesentlichen dieselben Komponenten wie die Längslenker 10, 20 von Figur 1 auf. Deshalb sind diese Elemente mit denselben Bezugszeichen versehen und werden hier nicht nochmals erläutert. Es wird deshalb nur auf den Unterschied zwischen den Längslenkern 30, 40 von Figur 2 zu den Längslenkern 10, 20 von Figur 1 näher eingegangen.

Bei den in Figur 1 dargestellten Längslenkern liegt ein Federaufnahmefortsatz 11, 21 im wesentlichen auf derselben Höhe in einer Fahrzeugvertikalrichtung Z wie die Gelenkaufnahme 12, 22. In anderen Worten bildet eine Oberwand 21a des Federaufnahmefortsatzes 21 im wesentlichen eine lineare oder horizontale Fortsetzung einer Oberwand 26 des Längslenkers 20. Dasselbe gilt für den anderen Längslenker 10 von Figur 1, da die Längslenker 10, 20 identisch oder spiegelsymmetrisch ausgebildet sind. Im Gegensatz hierzu bildet eine Oberwand 31a eines Federaufnahmefortsatzes 31 des Längslenkers 30 eine Fortsetzung einer Unterwand 36 des Längslenkers 30. Auf diese Weise kann ein Federaufnahmefortsatz 31 und somit dessen Oberwand 31a gegenüber einer Gelenkaufnahme in einer Fahrzeugvertikalrichtung Z höher angeordnet werden. Auf diese Weise kann die Fahrhöhe, also das Abstandsmaß zwischen Chassis-Unterkante und der Achsmitte, eines entsprechenden Fahrzeugs und/oder eine Federeinbaukonfiguration gegenüber dem ersten Ausführungsbeispiel variiert werden. Im übrigen ist das Paar Längslenker 30, 40 von Figur 2 genauso ausgebildet wie das Paar Längslenker 10, 20 von Figur 1.

Grundsätzlich können die Federaufnahmefortsätze 31 auch sehr kurz sein oder gänzlich entfallen. In diesem Fall stützen sich die nicht gezeigten Federn auf dem nicht gezeigten Achsrohr und/oder teilweise auf den sehr kurzen Federaufnahmefortsätzen 31 ab. Bei dieser Bauform ist keine oder nur eine sehr gering ausgeprägte Kröpfung der Längslenker 10, 20, 30, 40 notwendig. Dadurch kann die Länge des Einsatzmaterials weiter reduziert werden, da auch die Gesamtlänge des so produzierten Längslenkers 10, 20, 30, 40 geringer ist.

Das Verfahren zum Herstellen dieser Längslenker 10, 20, 30, 40 wird nachfolgend detailliert beschrieben. Zunächst wird ein Rohr aus einem geeigneten Werkstoff mit guten Tiefzieheigenschaften, d.h. mit einer Bruchdehnung von mindestens 10% in eine gemäß der herzustellenden Form der Längslenker 10, 20, 30, 40 ausgebildeten Negativform aus Stahl eingesetzt. Danach werden beide Enden des Rohrs dicht verschlossen und Flüssigkeit in das Rohr eingefüllt. Diese Flüssigkeit wird nun durch eine Druckerzeugungsvorrichtung unter einen hohen Druck von ca. 1800 bis 2200 bar gesetzt. Durch diesen hohen Druck fließt das Material des Stahlrohrs und legt sich an die Wandung der Negativform an, um deren Gestalt anzunehmen.

Anschließend kann das so geformte Hohlteil aus der Negativform nach dem Aufheben des Drucks und dem Ablassen der Flüssigkeit entnommen werden. Überschüssige Teile eines Ein- und Auslaufs der Negativform werden von dem geformten Hohlteil durch Sägen oder eine Laserbearbeitung entfernt, so daß ein Hohlteil entsteht, wie es in Figur 3 dargestellt ist.

Als Flüssigkeit zum Hydroformen des Hohlteils wird vorzugsweise Wasser mit geeigneten Zusätzen verwendet.

Das in Figur 3 dargestellte Hohlteil wird dann entlang einer etwa S-förmigen Linie in der Mitte durchgeschnitten, so daß ein Paar identische oder spiegelsymmetrische Längslenker 10, 20 oder 30, 40, wie sie in Figur 1 und 2 dargestellt sind, gebildet werden.

Anschließend wird eine nicht gezeigte Gelenkbuchse in eine Gelenkaufnahme 12, 22 des Längslenkers 10, 20 eingebracht, beispielsweise eingeschweißt. Um die Biege- und Torsionssteifigkeit des Längslenkers 10, 20 weiter zu verbessern, kann noch ein im wesentlichen dreieckförmiges Teil aus den Seitenwänden 13, 14 bzw. 23, 24 in der Nähe der Gelenkaufnahme 12, 22 ausgeschnitten werden.

Anschließend wird ein zungenförmiger Abschnitt 15a, 25a der Unterwand 15, 25 so zu der Gelenkaufnahme 12, 22 hochgebogen, daß der zungenförmige Abschnitt 15a, 25a mit den Seitenwänden 13, 14 bzw. 23, 24 verschweißt werden kann.

Um Gewicht einzusparen oder/und um Raum für weitere Fahrwerksbauteile zu schaffen, wird danach ein zentraler Abschnitt der Einbeulungen 17, 27, 29 z. B. mittels eines Lasers ausgeschnitten. Die im wesentlichen kreisrunde Achsaufnahme 18, 28 wird aus dem Längslenker 10, 20 z. B. mittels eines Lasers ausgeschnitten.

Danach folgt für die in Figur 2 dargestellten Lenker 30, 40 das Anbringen von Deckblechen auf den Federaufnahmefortsätzen als Auflage für die nicht gezeigten Federn. Diese Bleche können bevorzugt durch Schweißen befestigt werden, wobei diese Schweißnähte keinen erhöhten Belastungen unterliegen.

Die Erfindung ist nicht auf die Herstellung des hier beschriebenen Längslenkers10, 20, 30, 40 beschränkt. Insbesondere können auch andere Radaufhängungsbauteile wie beispielsweise Querlenker, Schräglenker, Raumlenker mit dem erfindungsgemäßen Verfahren hergestellt werden. Darüber hinaus können auch Rahmen und Struktur oder Karosseriebauteile mit dem erfindungsgemäßen Verfahren hergestellt werden. Die Wandstärke des Rohrs beträgt vor dem Hydroformen 3 bis 4 mm, es kann aufgrund des hohen Drucks von 1800 bis 2200 bar jedoch auch ein Rohr mit 5 bis 6 mm Wandstärke umgeformt werden. Die Form wird im voraus beispielsweise durch eine Finite-Elemente-Methode bestimmt, um einerseits eine hohe Zug, Druck und Biege- bzw. Torsionsfestigkeit des fertigen Längslenkers zu erhalten und andererseits Abschnitte mit übermäßiger Dehnung zu vermeiden.

Obwohl es hier nicht gezeigt ist, kann der Längslenker auch eine Form haben, bei der der Federaufnahmefortsatz 11, 21 in einer Fahrzeugquerrichtung Y nach innen versetzt ist. Auf diese Weise kann einerseits die Achse nahe den Rädern des Fahrzeugs durch die Längslenker 10, 20 gestützt werden, während andererseits die Federn nach innen zur-Fahrzeugmitte hin versetzt werden können, so daß die Einbauverhältnisse für die Feder freier variierbar sind.

### Bezugszeichenliste

- 10: Längslenker
- 11: Federaufnahmefortsatz
- 12: Gelenkaufnahme
- 13,14: Seitenwand
- 15: Unterwand
- 15a: zungenförmiger Abschnitt
- 16: Oberwand
- 17: Einbeulung
- 18: Achsaufnahme
- 20: Längslenker
- 21: Federaufnahmefortsatz
- 21 a: Oberwand des Federaufnahmefortsatzes
- 22: Gelenkaufnahme
- 23, 24: Seitenwand
- 25: Unterwand
- 25a: zungenförmiger Abschnitt
- 26: Oberwand
- 27: Einbeulung
- 28: Achsaufnahme
- 29: Einbeulung
- 30: Längslenker
- 31: Federaufnahmefortsatz
- 31 a: Oberwand des Federaufnahmefortsatzes
- 32: Gelenkaufnahme
- 36: Unterwand
- 40: Längslenker
- 41: Federaufnahmefortsatz
- 110, 120: Rohrende
- 117, 127, 129: Boden der Einbeulung

## Patentansprüche

1. Verfahren zum Herstellen eines Achsenbauteils mit folgenden Schritten:
Anordnen eines hohlen, nicht vorgeformten Halbzeuges, wie beispielsweise eines Rohrs, in einer Negativform zum Formen des Achsenbauteils;
Einleiten von Flüssigkeit in das Innere des hohlen Halbzeuges; und
Beaufschlagen der Flüssigkeit mit hohem Druck, um **dadurch** das hohle Halbzeug entsprechend der Negativform zu verformen, wobei das Achsenbauteil im wesentlichen eine längliche Form aufweist, **dadurch gekennzeichnet, daß**
zumindest zwei im wesentlichen identische Achsenbauteile (10, 20; 30, 40) geformt werden, die nach dem Formen getrennt werden, und daß
die zumindest zwei im wesentlichen identischen Achsenbauteile (10, 20; 30, 40) sich in einer Längsrichtung überlappen.

2. Verfahren nach Anspruch 1, wobei das hohle Halbzeug eine Wandstärke von mindestens 2 mm, vorzugsweise von 3 bis 6 mm, am meisten bevorzugt von 4 bis 5 mm, hat.

3. Verfahren nach einem der vorherigen Ansprüche, wobei der Druck im Bereich von 1200 bis 2500 bar (120 x 10⁶ Pa bis 250 x 10⁶ Pa), vorzugsweise im Bereich von 1800 bis 2200 bar (180 x 10⁶ bis 220 x 10⁶ Pa) liegt.

4. Verfahren nach einem der vorherigen Ansprüche, wobei das Achsenbauteil (10, 20; 30, 40) ein Radaufhängungslenker ist, der Federaufnahmefortsätze (11, 21; 31; 41) aufweist.

5. Verfahren nach Anspruch 4, wobei die Form zum Formen des Achsenbauteils so ausgebildet wird, dass die Federaufnahmefortsätze (11, 21; 31; 41) in einer Querrichtung der Radaufhängungslenker seitlich versetzt angeordnet sind.

6. Verfahren nach einem der Ansprüche 4 oder 5, wobei das Verfahren des weiteren den Schritt des Einschweißens einer Buchse in eine Gelenkaufnahme (12, 22; 32, 42) für die schwenkbare Befestigung des Radaufhängungslenkers an einem Fahrzeugrahmen aufweist.

7. Verfahren nach einem der vorherigen Ansprüche des weiteren mit den Schritten:
Ausschneiden von gegenüberliegenden Seitenwänden (13, 14, 23, 24) an einem in der Längsrichtung des Achsenbauteils liegenden Ende;
Biegen einer zu den Seitenwänden benachbarten Ober- oder Unterwand (15a, 25a), so dass die Ober- bzw. Unterwand (15a, 25a) an einer Schnittkante der Seitenwände (13, 14, 23, 24) im wesentlichen anliegt; und
Verschweißen der Ober- bzw. Unterwand im wesentlichen entlang der Schnittkante.

8. Verfahren nach einem der vorherigen Ansprüche, des weiteren mit den Schritten:
Ausbilden zumindest einer Einbeulung (17, 27, 29) an zumindest einer Seitenwand des Achsenbauteils; und
Ausschneiden eines Bodens der Einbeulung (117, 127, 129).

## Claims

1. Method for manufacturing an axle component with the following steps:
arranging a hollow, non-preformed, semi-finished product such as a tube in a negative mold for the forming of the axle component;
introduction of fluid into the interior of the hollow semi-finished product; and
loading the liquid with high pressure in order to deform the hollow semi-finished product in accordance with the negative mold, wherein the axle component has an essentially long shape, **characterized in that**
at least two essentially identical axle components (10; 20; 30, 40) are formed, which are separated after the forming, and that
the at least two essentially identical axle components (10, 20; 30, 40) overlap in a lengthwise direction.

2. Method per claim 1, wherein the hollow semi-finished product has a wall thickness of at least 2 mm, preferably 3 to 6 mm, most preferred of 4 to 5 mm.

3. Method per one of the preceding claims, wherein the pressure lies in the range of 1200 to 2500 bar (120 x 10⁶ Pa to 250 x 10⁶ Pa) preferably in the range of 1800 to 2200 bar (180 x 10⁶ Pa to 220 x 10⁶ Pa).

4. Method per one of the preceding claims, wherein the axle component (10, 20; 30, 40) is a wheel suspension arm having spring seat extensions (11, 21; 31; 41).

5. Method per claim 4, wherein the mold for the forming of the axle component is configured such that the spring seat extensions (11, 21; 31; 41) are set off from each other to the side in one cross direction of the wheel suspension arm.

6. Method per one of claims 4 or 5, wherein the method moreover has the step of welding a bushing into a joint socket (12, 22; 32; 42) for the pivotable fastening of the wheel suspension arm on a vehicle frame.

7. Method per one of the preceding claims, furthermore with the steps:
cutting out of opposite side walls (13, 14, 23, 24) at one end lying in the lengthwise direction of the axle component;
bending of one upper or lower wall (15a, 25a) adjoining the side walls so that the upper or lower wall (15a, 25a) essentially lies against one cut edge of the side walls (13, 14, 23, 24); and
welding of the upper or lower wall essentially along the cut edge.

8. Method per one of the preceding claims, furthermore with the steps:
forming of at least one indentation (17, 27, 29) on at least one side wall of the axle component; and
cutting out of a bottom of the indentation (117, 127, 129).

## Revendications

1. Procédé pour fabriquer un composant d'essieu, comprenant les étapes suivantes :
on agence un demi-produit creux non déformé, comme par exemple un tube, dans un moule négatif pour mise en forme du composant d'essieu ;
on introduit un liquide à l'intérieur du demi-produit creux ; et
on met le liquide sous haute pression, afin de déformer ainsi le demi-produit creux de façon correspondante au moule négatif, le composant d'essieu présentant sensiblement une forme allongée,
**caractérisé en ce que** l'on met en forme au moins deux composants d'essieu (10, 20 ; 30, 40) sensiblement identiques, qui sont séparés après la mise en forme, et
**en ce que** lesdits au moins deux composants d'essieu (10, 20 ; 30, 40) sensiblement identiques se chevauchent dans une direction longitudinale.

2. Procédé selon la revendication 1, dans lequel le demi-produit creux présente une épaisseur de paroi d'au moins 2 mm, de préférence de 3 à 6 mm, et de façon la plus préférée de 4 à 5 mm.

3. Procédé selon l'une des revendications précédentes, dans lequel la pression est dans la plage de 1200 à 2500 bar (120 x 10⁶ Pa à 250 x 10⁶ Pa), de préférence dans la plage de 1800 à 2200 bar (180 x 10⁶ Pa à 220 x 10⁶ Pa).

4. Procédé selon l'une des revendications précédentes, dans lequel le composant d'essieu (10, 20 ; 30, 40) est un bras de suspension de roue qui comporte des prolongements de réception de ressort (11, 21 ; 11 ; 31).

5. Procédé selon la revendication 4, dans lequel le moule pour la mise en forme du composant d'essieu est réalisé de telle façon que les prolongements de réception de ressort (11, 21 ; 31 ; 41) sont agencés en décalage latéralement dans une direction transversale du bras de suspension de roue.

6. Procédé selon l'une des revendications 4 ou 5, ledit procédé comprenant l'étape supplémentaire consistant à souder une douille dans une réception d'articulation (12, 22 ; 32, 42) pour fixer de façon pivotante le bras de suspension de roue sur un châssis de véhicule.

7. Procédé selon l'une des revendications précédentes, comprenant les étapes supplémentaires consistant à :
découper des parois latérales opposées (13, 14, 23, 24) à une extrémité dans la direction longitudinale du composant d'essieu ;
cintrer une paroi supérieure ou inférieure (15a, 25a) voisine des parois latérales de sorte que la paroi supérieure ou inférieure (15a, 25a) s'applique sensiblement contre une arête de coupe des parois latérales (13, 14, 23, 24) ; et
souder la paroi supérieure ou la paroi inférieure sensiblement le long de l'arête de coupe.

8. Procédé selon l'une des revendications précédentes, comprenant les étapes supplémentaires consistant à :
réaliser au moins un bossage (17, 27, 29) sur au moins une paroi latérale du composant d'essieu ; et
découper un fond du bossage (117, 127, 129).
